# EUROPÄISCHE PATENTSCHRIFT

(11) **EP 2 983 010 B1**
(45) Veröffentlichungstag und Bekanntmachung des Hinweises auf die Patenterteilung: **14.03.2018**
(21) Anmeldenummer: 15401081.3
(22) Anmeldetag: 03.08.2015
(51) Int. Cl.: G01S 19/14, G01S 19/39, A01B 69/00, G01C 21/20

(54) **VERFAHREN ZUR KORREKTUR IN EINEM SPEICHER EINES ARBEITSRECHNERS GESPEICHERTER POSITIONSDATEN**
METHOD FOR CORRECTING POSITION DATA STORED IN A MEMORY OF A WORK COMPUTER
PROCEDE DE CORRECTION DES DONNEES DE POSITION ENREGISTREES DANS UNE MEMOIRE D'UN ORDINATEUR AUXILIAIRE

(30) Priorität: 07.08.2014 DE 102014111231
(43) Veröffentlichungstag der Anmeldung: 10.02.2016
(73) Patentinhaber: Amazonen-Werke H. Dreyer GmbH & Co. KG, 49205 Hasbergen (DE)
(72) Erfinder: Kötter, Heiner, 49086 Osnabrück (DE); Kühn, Christoph, 49824 Ringe (DE)

(56) Entgegenhaltungen:
- EP-A2- 1 915 894
- JP-A- 2005 266 627
- US-A- 5 774 826
- US-A1- 2004 186 644

## Beschreibung

Die Erfindung betrifft ein Verfahren gemäß des Oberbegriffes des Patentanspruches 1.

Ein Verfahren zur Detektion und Steuerung der Position einer landwirtschaftlichen Arbeitsmaschine mittels eines Positionssensors, wie beispielsweise eines GPS-Sensors, ist allgemeiner Stand der Technik.

Äußere Einflüsse, wie die wechselnden Bedingungen der Signalübertragung zwischen Positionssensor und Satelliten durch die Erdatmosphäre und die schwankende Anzahl an verfügbaren Satelliten, die eine Sichtlinie zum Positionssensor auszeichnet, führt zu einer ungenauen Positionsbestimmung. Dies bedeutet, dass die durch den Positionssensor ermittelte Positionskoordinate einer Position beispielweise auf einer landwirtschaftlichen Fläche oder der mittels des Positionssensors in einem Speicher hinterlegte Koordinatenverlauf einer Feldgrenze einer landwirtschaftlichen Fläche nicht reproduzierbar ist.

Der Fehler hierbei kann mehrere Meter betragen. Bei der Arbeit mit landwirtschaftlichen Arbeitsmaschinen, welche über einen Positionssensor verfügen, führt das während einer Feldbearbeitung normalerweise nicht zu Problemen, da die oben beschriebenen Bedingungen über den Zeitraum einer typischen Feldbearbeitung sich wenig ändern. Werden jedoch wesentliche Koordinateninformationen einer landwirtschaftlichen Fläche, wie Feldgrenzen, Hindernisse, Gewässer oder dergleichen mittels des Positionssensors gespeichert und beim nächsten Anfahren der Fläche erneut aufgerufen, so beträgt die Abweichung der neuen vom Positionssensor ermittelten Koordinaten unter ansonsten gleichen Bedingungen typischerweise mehrere Meter. So wird beispielsweise bei der GPS-gestützten Arbeit mit einer Feldspritze oftmals vor dem Arbeitsprozess die landwirtschaftliche Fläche zur Bestimmung der Feldgrenze umfahren, um während der Arbeit durch eine GPS-basierte Schaltung der einzelnen Spritzdüsen eine möglichst präzise Mengendosierung in Rand- und Überlappungsbereichen durchführen zu können. Bei einer erneuten Bearbeitung der Fläche zu einem anderen Zeitpunkt ist es wegen der bereits beschriebenen Abweichungen jedoch nicht ausreichend lediglich die bei der Umfahrung der Fläche gespeicherten Positionskoordinaten erneut aufzurufen.

Diesem Umstand wird durch verschiedene aus dem Stand der Technik bekannte Verfahren begegnet, indem beispielsweise mit der landwirtschaftlichen Arbeitsmaschine eine definierte Feldposition angesteuert wird, an deren Position eine erneute Messung der Positionskoordinaten, also eine Korrekturmessung, durchgeführt wird und mit dieser Information die gespeicherten Positionsinformationen entsprechend der neuen Positionskoordinaten verschoben werden. Diese Korrekturmessung wird typischerweise kurz nach dem Befahren der landwirtschaftlichen Fläche durchgeführt. Oftmals führt jedoch die einmalige Positionsbestimmung in einem Bereich größerer Dichte an Bäumen und Gebäuden, wie sie im Grenzbereich der landwirtschaftlichen Fläche zu finden ist, zu einer unpräzisen Messung und damit größeren Fehlern mit der Folge, dass die Korrektur ungenügend durchgeführt wird und die oben beschriebene Korrekturmessung nicht oder nur unwesentlich die im Speicher hinterlegten Positionskoordinaten an die aktuellen Gegebenheiten anpasst. Der Grund hierfür ist, dass für eine präzise Korrektur von dem Nutzer ein eindeutig und reproduzierbar identifizierbarer Ort angefahren werden muss, also ein markanter Punkt der landwirtschaftlichen Fläche. Dies kann ein Eckpunkt der Fläche oder der Ort des Auffahrens auf die Fläche sein. Typischerweise ist jedoch wie bereits erwähnt die Bewuchs- und Bebauungsdichte in diesen Bereichen recht hoch, so dass es zu Ungenauigkeiten bei dieser Korrekturmethode kommt.

Die EP 1 915 894 A2 beschreibt ein gattungsgemäßes Verfahren. Hierbei wird ein Verfahren zur Korrektur in einem Speicher eines Arbeitsrechners und/oder eines Jobrechner eines landwirtschaftlichen Zugfahrzeugs und/oder eine landwirtschaftlichen Arbeitsmaschine temporär und/dauerhaft gespeicherter und gegenüber der mit mindestens einem an dem Zugfahrzeug und/oder der Arbeitsmaschine sich befindlichen Positionssensor aktuell gemessenen Position aufgrund von mit der Positionsbestimmung mittels Satellit Ordnung einhergehenden trifft Effekten und/oder sonstiger Fehlerquellen verschobener Positionskoordinaten einer Feldgrenze, Feldgrenzabschnitte und/oder charakteristischer Landmarken mithilfe von mindestens 2 Referenzmessungen der aktuellen Positionskoordinaten mit ebenjenem Positionssensor.

Die JP 2005 266627 A beschreibt ein Positionsüberwachungssystem für ein mobiles System, wobei die Position des mobilen Systems in Verbindung mit einer GPS-Positioniereinrichtung auf einer elektronischen Karte angezeigt wird. Wenn die Position des mobilen Systems auf der elektronischen Karte angezeigt wird, wird die Position eines Referenzpunktes auf der elektronischen Karte mit der von der GPS-Positioniereinrichtung tatsächlichen ermittelten Position verglichen und die Differenz ermittelt und als Fehler der elektronischen Karte definiert und entsprechend die elektronische Karteninformation korrigiert, indem der Fehler als Korrekturwert verwendet wird.

Eine weitere Möglichkeit, wie sie in US2006147089 beschrieben wird, ist die automatische visuelle Erfassung und Positionsbestimmung beispielsweise charakteristischer Landmarken und Positionskorrektur anhand der gemessenen Position jener Landmarken. Dies birgt jedoch zusätzliche Fehlerquellen, welche durch die automatische Erfassung der Landmarken und automatischen Positionsbestimmung bedingt sind.

Vorteilhaft wäre ein einfaches, fehlerunanfälligeres Verfahren zur Positionsbestimmung, welches zu einer präziseren Positionskorrektur einer mittels Positionssensoren bestimmten Positionskoordinate führt, als die einmalige Messung der Positionskoordinaten im Satellitenschatten von Baumwuchs und Gebäuden im Randbereich der zu bearbeitenden landwirtschaftlichen Fläche. Aufgabe der vorliegenden Erfindung ist es demgemäß die Korrektur von vorhandenen vorzugsweise mit einem Positionssensor zu einem früheren Zeitpunkt detektierten und/oder aus dem Internet geladenen Positionskoordinaten entsprechend der aktuell gemessenen Positionskoordinaten zu korrigieren bzw. an die aktuellen Gegebenheiten anzupassen.

Dies wird durch ein Verfahren zur Korrektur von in einem Speicher gespeicherten Positionskoordinaten eines zumindest eindimensionalen Objektes, beispielsweise einer Linie, entsprechend der aktuell gemessenen Position gemäß Anspruch 1 erreicht, wobei Referenzmessungen zur Durchführung jeweils einer mathematischen Verschiebeoperation der in der Vergangenheit gemessenen Positionskoordinaten verwendet werden, um die in der Vergangenheit gespeicherten Positionskoordinaten zu korrigieren und an die aktuelle Messung anzupassen, wobei mindestens zwei dieser Verschiebeoperationen in nicht paralleler Richtung durchgeführt werden und die Verschieberichtung mindestens einer der Verschiebeoperationen auf Grund von Lage- und Bewegungsrichtungsdaten der Arbeitsmaschine und/oder des Zugfahrzeuges durchgeführt wird. Diese Vorgehensweise ermöglicht eine präzisere Positionsbestimmung wegen der zweifachen Messung unter Berücksichtigung der im Allgemeinen mit hoher Genauigkeit durchführbaren Richtungsbestimmung insbesondere in Randbereichen einer Landwirtschaftlichen Fläche, wo die Qualität der Signale zur Positionsbestimmung wg. Bebauung oder Bewuchs oftmals eher gering ist.

In einer vorteilhaften Ausgestaltung der Erfindung werden zwei, vorzugsweise die beiden letzten, der zumindest zwei Verschiebeoperationen in zueinander senkrechter Richtung zur endgültigen Positionsfestlegung vorgenommen. Somit werden die Verschiebeoperationen durch zwei unabhängige Translationen realisiert.

In einer möglichen Ausgestaltung der Erfindung wird die erste Verschiebeoperation senkrecht zur Fahrtrichtung des Zugfahrzeugs oder der Arbeitsmaschine durchgeführt. Hierdurch ist es möglich in vorteilhafter Weise eine ausgezeichnete Richtung bzgl. derer die Verschiebeoperationen durchgeführt werden können, einzuführen.

In einer vorteilhaften Weiterbildung der Erfindung wird jede der besagten Referenzmessungen durch ein Kommando des Fahrers des Zugfahrzeuges oder der landwirtschaftlichen Arbeitsmaschine, insbesondere zumindest ein Sprachkommando oder zumindest ein Kommando auf einer Tastatur oder einem berührungsempfindlichen Bildschirm, ausgelöst. Hierdurch kann der Fahrer der landwirtschaftlichen Arbeitsmaschine vorteilhafte Regionen der landwirtschaftlichen Fläche ansteuern, in deren Umfeld beispielsweise wenig Bewuchs oder Bebauung vorhanden ist.

In einer vorteilhaften Ausgestaltung nimmt das Zugfahrzeug und/oder die landwirtschaftliche Arbeitsmaschine, vorzugsweise Feldspritze oder Düngerstreuer, für die Referenzmessungen eine von einem in einem Jobrechner des Zugfahrzeugs und/oder der Arbeitsmaschine gespeicherten Programm vorgegebene Position im Raum ein, vorzugsweise derart, dass der seitliche Abstand der Arbeitsmaschine, vorzugsweise Feldpritze oder Düngerstreuer, zu dem Objekt, vorzugsweise der Feldgrenze bzw. des Feldgrenzabschnittes, der Länge des Spritzgestängeauslegers/ der über den Düngerstreuer hinausreichenden Breite des Streufächers entsprechen muss. Ein Feldgrenzabschnitt ist hierbei ein Teil einer Feldgrenze, welcher gerade, also zumindest annähernd ohne Krümmung und Knick verläuft.

Mittels dieser Methode ist unmittelbar der reale Abstand und/oder die reale Orientierung der Arbeitsmaschine zu dem Objekt/ der Feldgrenze dessen Koordinaten korrigiert werden sollen definiert. Zusätzlich kann so auf vorteilhafte Art und Weise die Korrektur der Positionskoordinaten während der Bearbeitung des Außenbereichs der landwirtschaftlichen Fläche durchgeführt werden.

In einer vorteilhaften Weiterbildung müssen die Bewegungsrichtungen des Zugfahrzeugs bzw. der landwirtschaftlichen Arbeitsmaschine während zweier für die Verschiebeoperation verwendeter Referenzmessungen mindestens einen vorgegebenen Winkel, vorzugsweise zwischen 30° und 45 °, zur Durchführung der Verschiebeoperation einschließen. Diese Vorgehensweise erhöht die Präzision der Verschiebeoperationen, da die Richtung der zweiten der zwei vorzugsweise senkrecht zueinander orientierten Verschiebeoperationen mit größerer Präzision bestimmt werden kann, je größer der Winkel der Bewegungsrichtungen zueinander ist.

Eine vorteilhafte Weiterbildung wäre hierbei, dem Fahrer der landwirtschaftlichen Arbeitsmaschine einen akustischen oder optischen Hinweis auf einer geeigneten Anzeigeeinrichtung zu geben, falls der oben beschriebene minimale Winkel nicht überschritten wurde.

Um dem Fahrer der landwirtschaftlichen Arbeitsmaschine Informationen zu übermitteln, wie die Orientierung der gespeicherten Koordinaten relativ zu den korrigierten Koordinaten und/oder zu der Position der Referenzmessungen ist, kann dieses in geeigneter Weise auf einer Anzeigevorrichtung ausgegeben werden. Dieses ermöglicht dem Fahrer zum einen eine Einschätzung der Genauigkeit der Positionsbestimmung auf Grund der angezeigten Änderung der Positionskoordinaten über den Zeitraum zwischen Speicherung bzw. letzter Korrektur der Positionskoordinaten und der aktuellen Messung. Außerdem können so etwaige Fehler bei der Korrektur der Positionskoordinaten beispielsweise anhand ungewöhnlich großer Korrekturverschiebungen auf dem Bildschirm erkannt werden.

In einer vorteilhaften Weiterbildung werden auf der das Objekt anzeigenden Anzeigeeinheit Koordinaten dargestellt, an denen die Referenzmessung durch den Fahrer des Zugfahrzeugs oder der landwirtschaftlichen Maschine durchzuführen sind. Auf diese Weise kann ein gespeichertes Programm auf dem Jobrechner der Arbeitsmaschine oder der Zugmaschine an die die Arbeitsmaschine angekoppelt ist, sinnvolle Positionen zur Durchführung der Referenzmessung vorgeben, welche sich zum Beispiel durch große Entfernung zu Bewuchs und Bebauung und somit ein potentiell gutes Satellitensignal auszeichnen oder beispielsweise charakteristische Landmarken sind welche mit großer Präzision angesteuert werden können, was wiederum die Genauigkeit der Verschiebeoperation erhöht.

In einer vorteilhaften Ausgestaltung werden die Referenzmessungen während der Bearbeitung der Randbereiche des Feldes automatisch an dafür geeigneten Positionen, welche dadurch ausgezeichnet sind, dass die Fahrtrichtungen zueinander mindestens einen vorgegebenen Winkel, vorzugsweise zwischen 30° und 45°, einschließen, durchgeführt. Dies führt zu einer zusätzlichen Entlastung des Fahrers. Die Lokalisierung der Fahrzeugposition kann hierbei beispielsweise durch einen Vergleich der Fahrtrichtungen bzw. der abgefahrenen Kontur im Außenbereich des Feldes zu der abgespeicherten Kontur einer landwirtschaftlichen Fläche erreicht werden.

Weitere vorteilhafte Ausgestaltungen verringern die Fehleranfälligkeit des Verfahrens in schmalen Bereichen einer landwirtschaftlichen Fläche, beispielsweise Keilflächen, wo auf Grund der Nähe zu zwei, beispielsweise sich zumindest annähernd gegenüberliegenden Grenzen der Keilfläche, die Verschieberichtung wegen der unbekannten Größe und Richtung der Verschiebeoperation uneindeutig sein kann. Um Fehler bei solchen Konstellationen zu vermeiden kann vorgesehen sein, dass der Abstand zu der Arbeitsmaschine oder Teilen der Arbeitsmaschine, wie beispielsweise den Auslegern eines Spritzgestänges, oder Bereichen, welche der Arbeitsmaschine zugeordnet werden können, wie beispielsweise dem Streufächer eines Düngerstreuers, in einer Richtung einen Wert überschreiten muss. Wobei dieser Grenzwert des Abstandes zum Beispiel der größt- bzw. kleinstmöglichen Verschiebeoperation entsprechen kann. Alternativ kann der Winkel der Fahrtrichtung relativ zu dem Verlauf der Feldgrenze betrachtet werden und in die Richtung verschoben werden, wo der entsprechende Feldgrenzabschnitt einen kleineren Winkel zur Fahrtrichtung aufweist. Alternativ kann es vorgesehen sein, dass dem Fahrer der Arbeitsmaschine ein optischer und/oder akustischer Hinweis gegeben wird und/oder der Fahrer unter Umständen die Richtung der Verschiebeoperation durch Tastendruck auf einer Tastatur oder einem berührungsempfindlichen Bildschirm und/oder ein Sprachkommando vorgibt. Letzteres kann auch vorgesehen werden, falls eine oder beide der obigen Verfahren nicht eindeutig durchgeführt werden können, weil die Winkel und/oder Abstände in beiden Richtungen annähernd gleich sind oder entsprechende Grenzwerte unterschritten werden.

In einer vorteilhaften Weiterbildung kann vorgesehen sein, dass generell die Fahrtrichtung parallel zum Verlauf des Feldgrenzabschnittes ist, in dessen Richtung die Verschiebeoperation durchgeführt wird. Diese Vorgehensweise führt zu einer zusätzlichen Erhöhung der Genauigkeit der Positionskorrektur.

Weitere Einzelheiten der Erfindung sind der Beispielsbeschreibung zu entnehmen.
- Fig.1: zeigt beispielhaft den gespeicherten Feldgrenzverlauf und den realen Feldgrenzverlauf relativ zur Position der Arbeitsmaschine.
- Fig.2: stellt den ersten Schritt der Korrektur des gespeicherten Feldgrenzverlaufes mittels einer ersten Verschiebeoperation dar.
- Fig.3: zeigt die erneute Ausführung der ersten Verschiebeoperation bei Unterschreiten eines Winkelgrenzwertes der Fahrtrichtungen vor und nach einer Richtungsänderung der Arbeitsmaschine.
- Fig.4: illustriert die zweite Verschiebeoperation, ausgeführt nach einer erneuten Richtungsänderung, die hier zum Überschreiten des Winkelgrenzwertes führt.
- Fig.5: zeigt die spezielle Situation in schmalen Feld- oder Keilflächen.

Das erfindungsgemäße Verfahren der Korrektur von gespeicherten Positionsdaten wird im Folgenden anhand eines zu korrigierenden Feldgrenzverlaufes einer landwirtschaftlichen Fläche, welche mit einer Kombination aus einer Zugmaschine und einer angehängten Feldspritze bearbeitet wird, erläutert.

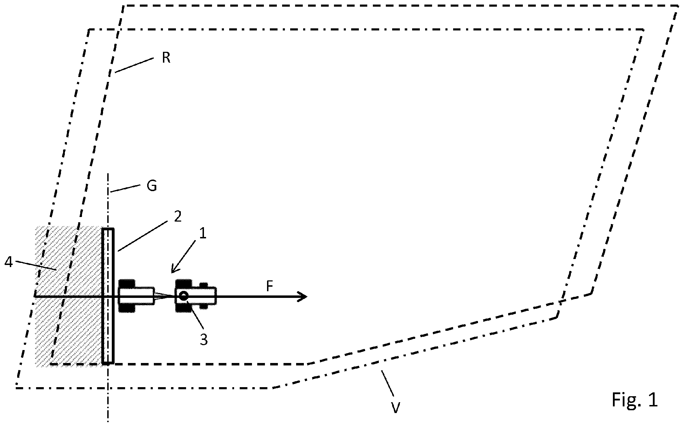

Fig. 1 zeigt einen gespeicherten Feldgrenzverlauf **V,** wie er beispielsweise auf einem Display einer geeigneten Anzeigevorrichtung in einer landwirtschaftlichen Arbeitsmaschine **(1)** angezeigt werden kann, wobei eine solche Anzeigevorrichtung nicht erfindungswesentlich ist. Der gespeicherte Feldgrenzverlauf wird in einem ersten Schritt typischerweise durch einmaliges Umfahren der landwirtschaftlichen Fläche ermittelt und dann im Speicher eines Jobrechners oder Bordcomputers der Arbeitsmaschine, also Zugmaschine, angehängten Maschine oder auch selbstfahrenden Maschine gespeichert. Dieser Prozess kann auch während der Bearbeitung des Randbereiches der landwirtschaftlichen Fläche bei bekannter und in dem Jobrechner oder Bordcomputer hinterlegter Abmessung der landwirtschaftlichen Maschine, beispielsweise Feldspritze, und/oder des Arbeitsbereiches der Maschine, beispielsweise der Arbeitsbreite eines Düngerstreuers, durchgeführt werden.

Hier dargestellt ist die landwirtschaftliche Arbeitsmaschine als Kombination einer Zugmaschine und einer angehängten Feldspritze mit einem Spritzgestänge **(2)** und der Gestängeachse **G.** Diese Kombination ist hierbei nicht erfindungswesentlich. Genauso ist die Erfindung anwendbar auf eine Kombination aus Zugmaschine und Düngerstreuer oder Sämaschine oder andere angebaute Geräte. Auch auf beliebige selbstfahrende Maschinen, wie Feldspritzen, Mähdrescher oder dergleichen ist die Erfindung anwendbar. Wesentlich ist hier lediglich, dass die Arbeitsmaschine, also die Zugmaschine oder das angehängte Gerät bzw. die selbstfahrende Maschine über zumindest einen Positionssensor **(3),** beispielsweise einen GPS-Sensor, verfügt. Weiterhin ist dargestellt der reale Feldgrenzverlauf **R,** wie er von dem Fahrer der Zugmaschine wahrgenommen wird. Der gespeicherte Feldgrenzverlauf **V** ist wie in Fig. 1 dargestellt relativ zu dem realen Feldgrenzverlauf **R** verschoben und zwar beispielsweise auf Grund von bekannten Drifteffekten, die bei Wiederansteuerung von in der Vergangenheit aufgezeichneten Positionsdaten auftreten, wobei auch hier unwesentlich ist, worin die Ursache der Verschiebung von realen und gespeicherten Positionsdaten liegt. So kann beispielsweise auch ein Fahrfehler bei der Aufzeichnung der ursprünglichen Positionsdaten zu einer solchen Verschiebung führen, welche bei einem erneuten Anfahren der Fläche mit dem erfindungsgemäßen Verfahren behoben werden kann.

Um eine Korrektur des gespeicherten Feldgrenzverlaufes durchzuführen wird nun der Arbeitsprozess in Fahrtrichtung **F** gestartet, indem im Außenbereich der landwirtschaftlichen Fläche mit dem Verteilen des Pflanzenschutzmittels begonnen wird. Der Abstand der landwirtschaftlichen Arbeitsmaschine zur Feldgrenze ist hierbei derart gewählt, dass der Spritzgestängeausleger an der Feldgrenze endet. Dies kann auch erfindungsgemäß auf einer geeigneten Anzeigeeinrichtung oder per akustischem Hinweis dem Fahrer als Vorgabe gemacht werden. Somit entsteht eine bearbeitete Fläche **(4)** hinter der Feldspritze, welche üblicherweise ungefähr an der Kante der Feldgrenze beginnt.

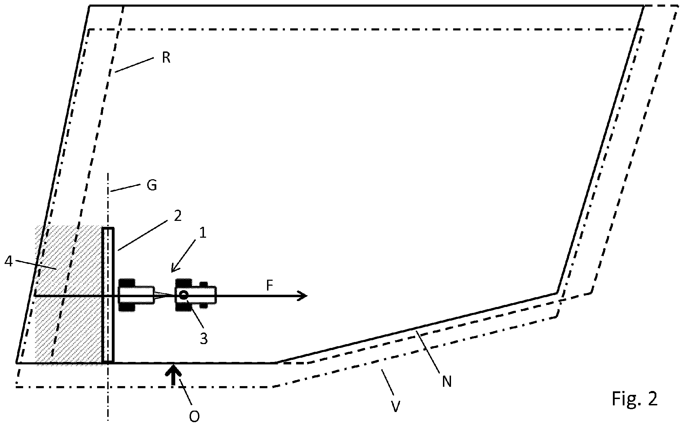

Ein erster Schritt zur Korrektur des gespeicherten Feldgrenzverlaufes wird nun, wie in Fig. 2 gezeigt, durchgeführt. Zuerst wird die Fahrtrichtung **F** durch den Jobrechner oder Bordcomputer mittels des Verlaufs der mit dem Positionssensor bestimmten Positionskoordinaten errechnet. Hierfür muss eine Mindeststrecke von typischerweise mehr als 10 m mit der Arbeitsmaschine zurückgelegt werden. Erfindungsgemäß kann auch ein Grenzwert für die in Geradeausfahrt zur Bestimmung der Fahrtrichtung mindestens zurückzulegende Distanz in einem Jobrechner oder einem Bordcomputer hinterlegt sein, wobei dem Fahrer ein akustischer oder optischer Hinweis auf einer geeigneten Anzeigeeinrichtung gegeben werden kann, falls bei einer durchzuführenden Referenzmessung dieser Grenzwert vorher nicht überschritten wurde, wobei vorzugsweise zwischen der Referenzmessung und der Überschreitung des Grenzwertes zumindest annähernd keine Richtungsänderung vorgenommen werden darf. Ein geradliniger Feldgrenzverlauf, wie in Fig. 2 dargestellt ist jedoch nicht notwendig.

Das erfindungsgemäße Verfahren führt auf Anweisung des Benutzers, beispielsweise durch Knopfdruck auf einer Tastatur oder einen berührungsempfindlichen Display oder per Spracheingabe, die erste Referenzmessung und entsprechend die Verschiebeoperation **O** durch. Mit Hilfe der erforderlichen, bekannten Abmessungen der Arbeitsmaschine, beispielsweise der Arbeitsbreite und der Position des Positionssensors auf der Arbeitsmaschine, sowie Fahrtrichtung wird nun der gespeicherte Feldgrenzverlauf senkrecht zur Fahrtrichtung **F,** also parallel zur Ausrichtung des Spritzgestänges **G** verschoben, in diesem Beispiel bis die Positionskoordinaten des Endes des Spritzgestängeauslegers und des gespeicherten Feldgrenzverlaufes in dem Punkt oder Abschnitt der Feldgrenze, welcher sich am nächsten zum Ende des Spritzgestängeauslegers befindet bzw. welcher auf der Gestängeachse **G** liegt, identisch sind, wobei der Feldgrenzabschnitt durch die in Fahrtrichtung sowie entgegen der Fahrtrichtung nächstliegenden Knicke oder Winkel im Feldgrenzverlauf eines geraden Feldgrenzabschnittes begrenzt wird. Die Verschieberichtung kann hierbei automatisch durch den Bordcomputer oder Jobrechner durch Bestimmung des dem Ende des Spritzgestängeauslegers nächstliegenden Feldgrenzabschnittes bestimmt oder durch manuelle Vorwahl des Fahrers der Arbeitsmaschine mittels eines geeigneten Kommandos auf einer Bedienvorrichtung oder eines akustischen Befehls vorgewählt werden. Wie in Fig. 2 dargestellt wird durch die Verschiebeoperation **O** der dem Ende des Spritzgestänges der Feldspritze am nächsten liegende Feldgrenzabschnitt des gespeicherten Feldgrenzverlaufes derart verschoben, dass die neue Lage der gespeicherten Feldgrenze **N** nun kollinear zum realen Feldgrenzverlauf ist. Dies gilt entsprechend für einen Feldgrenzabschnitt, der zu diesem Abschnitt parallel verläuft.

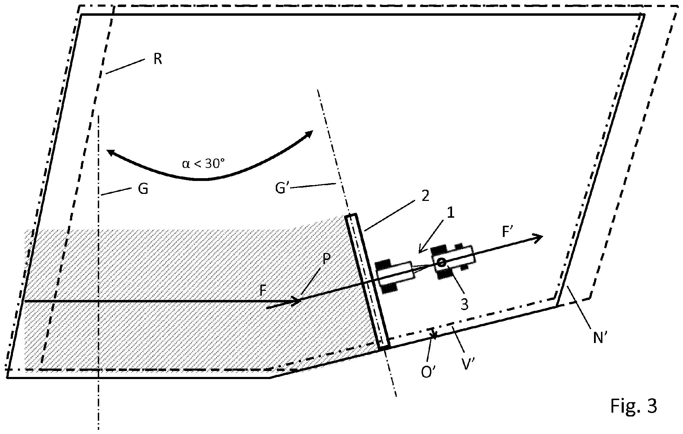

Die landwirtschaftliche Arbeitsmaschine passiert nun, wie in Fig. 3 dargestellt, bei der Weiterfahrt den Punkt **P** auf dessen Höhe sich der Verlauf der Feldgrenze ändert, wobei der Winkel α durch die beiden Feldgrenzverläufe, die Fahrtrichtungen **F** und **F'** bzw. die Ausrichtung der Spritzgestänge **G** entlang der Fahrtrichtung **F** links und **G'** entlang **F'** rechts von dem Punkt **P** bei Parallelfahrt relativ zum realen Feldgrenzverlauf **R** gebildet wird. Da dieser in diesem Beispiel kleiner ist als ein in dem Jobrechner oder Bordcomputer hinterlegter Grenzwert von beispielsweise 30° wird bei erneuter Aktivierung einer Referenzmessung und Verschiebeoperation, beispielsweise durch ein Kommando des Fahrers, in diesem Fall nicht eine Verschieboperation durchgeführt, welche zu der ersten Verschiebeoperation **O** senkrecht ist, sondern es wird stattdessen erneut eine Verschiebung entlang des Verlaufs des Spritzgestängeachse, in diesem Fall **G',** durchgeführt, was zu der Verschiebeoperation **O'** und damit zu der geänderten Lage des gespeicherten Feldgrenzverlaufs **N'** führt. Zusätzlich kann dem Fahrer ein Hinweis gegeben werden, dass der Grenzwert nicht überschritten wurde. Der hier beschriebene Grenzwert für den Winkel der beiden Feldgrenzabschnitte bzw. der Orientierungen der Spritzgestänge entlang der Feldgrenzabschnitte und die entsprechende Abfrage ob die Orientierung der Spritzgestänge diesen Grenzwert überschreiten führt, zu einer größeren Genauigkeit der Korrektur der gespeicherten Positionsdaten ist jedoch nicht erfindungswesentlich.

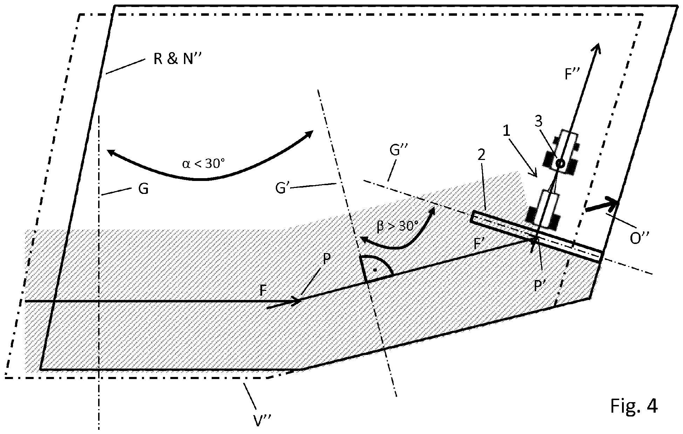

Im Verlauf der weiteren Bearbeitung des Randbereichs der landwirtschaftlichen Fläche passiert die Arbeitsmaschine nun, wie in Fig. 4 dargestellt, den Punkt **P'** an dem sich der Orientierung des Feldgrenzverlaufes erneut ändert, in diesem Fall um den Winkel β, welcher den Grenzwert von in diesem Beispiel 30° jedoch überschreitet. Somit wird bei erneuter Aktivierung der Referenzmessung und damit einhergehend Verschiebeoperation und Abgleich des Winkels zwischen den beiden Fahrtrichtungen **F'** und **F"** bzw. den Gestängeorientierungen **G'** und **G"** nun eine Verschiebeoperation **O"** durchgeführt welche senkrecht zu der vorhergehenden Verschiebung **O'** orientiert ist. Dies führt nun zu einer zumindest annähernd vollständigen Übereinstimmung des Feldgrenzverlaufes **N",** welcher durch die nochmalige Verschiebung konstruiert und nunmehr im Speicher des Jobrechner oder Bordcomputers hinterlegt ist und dem realen Feldgrenzverlauf **R.**

In einer anderen Ausgestaltung kann vorgesehen sein, nach einer ersten Referenzmessung und Verschiebeoperation solange keine weitere Referenzmessung und Verschiebeoperation durchzuführen, bis die Fahrtrichtung den erwähnten Grenzwert zu der Fahrtrichtung der Arbeitsmaschine zum Zeitpunkt dieser ersten Verschiebeoperation überschreitet.

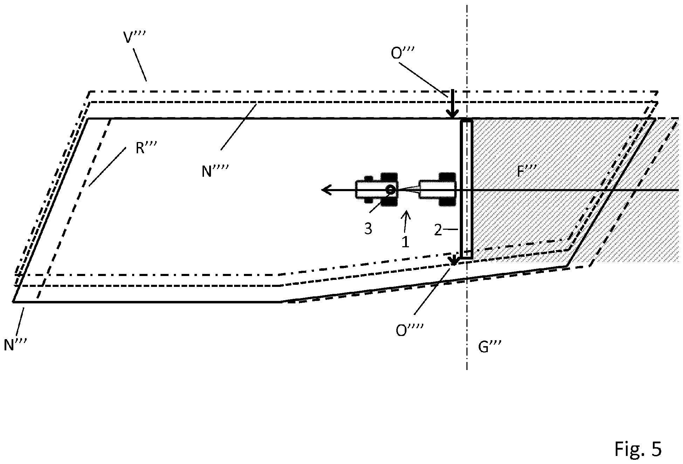

Sollte die Richtung der Verschiebeoperation automatisch, beispielsweise auf Grund des durch den Jobrechner oder den Bordcomputer bestimmten Abstand des Endes des Spritzgestängeauslegers zum gespeicherten Feldgrenzverlauf bestimmt werden, so kann es insbesondere in schmalen Bereichen einer landwirtschaftlichen Fläche, besonders in Keilflächen, zu Fehlern bei der Durchführung der Verschiebeoperation kommen, wie in Fig. 5 gezeigt. Wird in diesem Fall beispielweise allein auf Grund des Abstandes des Endes des Spritzgestänges **2** zu dem Verlauf der gespeicherten Feldgrenze **V'"** die Verschiebeoperation festgelegt, so würde die Verschiebung gemäß **O""** durchgeführt, da auf der entsprechenden ersten Seite des Spritzgestänges der Abstand zu dem gespeicherten Feldgrenzverlauf **V"'** kleiner als auf der gegenüberliegenden zweiten Seite des Spritzgestänges ist. Richtig wäre jedoch die Durchführung der Verschiebeoperation anhand des Abstandes zwischen dem Ende des Spritzgestänges und dem gespeicherten Verlauf des Feldgrenze **V"'** an der zweiten Seite des Spritzgestänges gemäß **O"'**.

Dieser potentiellen Fehlfunktion kann begegnet werden, indem das Verfahren zur Korrektur der Positionsdaten beispielsweise fordert, dass sobald die Abstände beider Enden des Spritzgestänges **2** zu einem Bereich des gespeicherten Feldgrenzverlaufes **V"'** einen Grenzwert unterschreiten oder falls die Differenz der minimalen Abstände der beiden Enden des Spritzgestänge zu dem gespeicherten Feldgrenzverlauf nicht mindestens einen zuvor festgelegten Grenzwert überschreiten, beispielsweise der Fahrer der Arbeitsmaschine, beispielsweise über ein akustisches Kommando oder eine Eingabe auf einer geeigneten Bedieneinrichtung, die Verschieberichtung manuell festlegt. Alternativ oder zusätzlich könnte ein Vergleich der Fahrtrichtung mit dem Verlauf der gespeicherten Feldgrenze zu einer Vermeidung des oben beschriebenen Fehlers führen. In dem in Fig. 5 gezeigten Beispiel würde ein Vergleich der momentanen Fahrtrichtung **F"'** mit dem Verlauf des jeweils zu den beiden Enden des Spritzgestänges nächstgelegenen Feldgrenzabschnittes zeigen, dass der Feldgrenzabschnitt auf der ersten Seite des Spritzgestänges bei **O""** einen Winkel zu der Fahrtrichtung einschließt welcher signifikant größer als 0° ist während auf der gegenüberliegenden zweiten Seite des Spritzgestänges bei **O"'** der Verlauf des nächstliegenden Feldgrenzabschnittes zumindest annähernd parallel zur Fahrtrichtung der Arbeitsmaschine ist. Wird also beispielsweise ein zusätzliches Kriterium für die Verschiebeoperation eingeführt, beispielsweise derart, dass falls die Abstände der Spritzgestängeseiten zu den nächstliegenden Feldgrenzabschnitten einen Grenzwert unterschreiten, die Verschiebeoperation in jene der beiden Richtungen durchgeführt wird, welche sich dadurch auszeichnet, dass der Winkel welcher durch die Fahrtrichtung und den entsprechenden Feldgrenzabschnitt gebildet wird, kleiner ist, so würde die Wahrscheinlichkeit für das Auftreten einer Fehlfunktion des Verfahrens unter der Annahme einer parallelen Fahrweise zu dem Feldgrenzabschnitt in dessen Richtung verschoben werden soll, wie oben beschrieben, verringert. Auch für die Winkelbetrachtung könnte hierbei ein Grenzwert derart definiert werden, dass die bestimmten Winkel zwischen dem Feldgrenzabschnitt des gespeicherten Feldgrenzverlaufs **V"'** und der Fahrtrichtung sich um einen Grenzwert unterscheiden müssen und andernfalls der Fahrer der Arbeitsmaschine die Verschieberichtung manuell, beispielsweise mittels Sprachkommando oder Eingabe auf einer geeigneten Bedieneinrichtung, festlegt. In dem in Fig. 5 gezeigten Beispiel betrifft dies die erste Verschiebeoperation. Die Durchführung der zweiten Verschiebeoperation ist hier nicht dargestellt.

Wie oben erwähnt beschränkt sich die erfindungsgemäße Anwendung der Referenzmessung und Durchführung der Verschiebeoperation nicht auf die Anwendung bei einer Feldspritze. Eine Durchführung auf Basis der Positionsdaten eines Zugfahrzeuges allein ist ebenso denkbar. Entscheidend ist lediglich, dass der oder die Bezugspunkte der Verschiebeoperation an der Arbeitsmaschine oder in dem Bereich, welcher der Arbeitsmaschine zugeordnet werden kann, beispielsweise der Streufächer eines Düngerstreuers, und/oder dessen relative Lage zum Positionssensor bestimmt ist. Dies können wie bereits beschrieben beispielsweise die Enden oder ein Ende eines Spritzgestänges oder eine oder beide Seiten eines Mähwerkes eines Mähdreschers oder eine oder beide Seiten einer Sähmaschine oder beispielsweise der Punkt oder die beiden Punkte des Streufächers eines Düngerstreuers sein, welche seitlich von der Arbeitsmaschine am weitesten entfernt sind.

Weiterhin kann erfindungsgemäß der derzeit aktuelle, gespeicherte und/oder bereits verschobene Feldgrenzverlauf auf einer geeigneten Anzeigeeinrichtung relativ zur aktuellen Position der Arbeitsmaschine und/oder zu dem ursprünglich gespeicherten unverschobenen Feldgrenzverlauf und/oder zu von dem Bordcomputer oder Jobrechner vorgegebenen und/oder durch den Fahrer gewählten bereits angefahrenen und/oder noch aufzusuchenden Punkten für Referenzmessungen angezeigt werden.

## Patentansprüche

1. Verfahren zur Korrektur in einem Speicher eines Arbeitsrechners und/oder Jobrechners eines landwirtschaftlichen Zugfahrzeugs und/oder einer landwirtschaftlichen Arbeitsmaschine (1) temporär und/oder dauerhaft gespeicherter, in der Vergangenheit gemessener und gegenüber der mit mindestens einem an dem Zugfahrzeug und/oder der Arbeitsmaschine sich befindlichen Positionssensor (3) aktuell gemessenen Position auf Grund von mit der Positionsbestimmung mittels Satellitenortung einhergehenden Drifteffekten und/oder sonstiger Fehlerquellen verschobener Positionskoordinaten einer Feldgrenze, eines Feldgrenzabschnitts und/oder charakteristischer Landmarken, mit Hilfe von mindestens zwei Referenzmessungen der aktuellen Positionskoordinaten mit eben jenem Positionssensor,
**dadurch gekennzeichnet, dass** um eine Korrektur der Positionskoordinaten durchzuführen, das Zugfahrzeug oder die Arbeitsmaschine in einem bekannten Abstand entlang der Feldgrenze, Feldgrenzabschnitt und/oder charakteristischer Landmarken fährt, dass jede der besagten Referenzmessungen jeweils zur Durchführung einer mathematischen Verschiebeoperation der in der Vergangenheit gemessenen Positionskoordinaten verwendet wird, um die in der Vergangenheit gemessenen Positionskoordinaten zu korrigieren und an die aktuelle Messung anzupassen, wobei mindestens zwei dieser Verschiebeoperationen in nicht paralleler Richtung durchgeführt werden und die Verschieberichtung mindestens einer der Verschiebeoperationen auf Grund von Lage- und Bewegungsrichtungsdaten der Arbeitsmaschine und/oder des Zugfahrzeuges durchgeführt wird.

2. Verfahren nach Anspruch 1, **dadurch gekennzeichnet, dass** zwei, vorzugsweise die beiden letzten, der zumindest zwei Verschiebeoperationen in zueinander senkrechter Richtung zur endgültigen Positionsfestlegung vorgenommen werden.

3. Verfahren nach zumindest einem der Ansprüche 1 oder 2 **dadurch gekennzeichnet, dass** die erste Verschiebeoperation senkrecht zur Fahrtrichtung des Zugfahrzeugs oder der Arbeitsmaschine durchgeführt wird.

4. Verfahren nach zumindest einem der Ansprüche 1 bis 3, **dadurch gekennzeichnet, dass** jede der besagten Referenzmessungen durch ein Kommando eines Fahrers des Zugfahrzeuges oder der landwirtschaftlichen Arbeitsmaschine, insbesondere zumindest ein Sprachkommando oder zumindest ein Kommando auf einer Tastatur oder einem berührungsempfindlichen Bildschirm, ausgelöst wird.

5. Verfahren nach zumindest einem der Ansprüche 1 bis 4, **dadurch gekennzeichnet, dass** das Zugfahrzeug und/oder die landwirtschaftliche Arbeitsmaschine, vorzugsweise Feldspritze oder Düngerstreuer, für die Referenzmessungen eine von einem in dem Arbeitsrechner und/oder Jobrechner des Zugfahrzeugs und/oder der Arbeitsmaschine gespeicherten Programm vorgegebene Position im Raum einnehmen muss, vorzugsweise derart, dass der seitliche Abstand der Arbeitsmaschine, vorzugsweise Feldpritze oder Düngerstreuer, zu der Feldgrenze, dem Feldgrenzabschnitt und/oder den charakteristischen Landmarken der Länge eines Spritzgestängeauslegers bzw. der über den Düngerstreuer hinausreichenden Breite eines Streufächers entsprechen muss.

6. Verfahren nach zumindest einem der Ansprüche 1 bis 5, **dadurch gekennzeichnet, dass** die Bewegungsrichtungen des Zugfahrzeugs bzw. der landwirtschaftlichen Arbeitsmaschine während zweier für die Verschiebeoperation verwendeter Referenzmessungen mindestens einen vorgegebenen Winkel, welcher vorzugsweise zwischen 30° und 45 ° beträgt, zur Durchführung der Verschiebeoperation einschließen müssen.

7. Verfahren nach Anspruch 6, **dadurch gekennzeichnet, dass** falls der vorgegebene Winkel während der besagten Referenzmessung nicht überschritten wurde, für den Fahrer ein Hinweis, vorzugsweise optisch auf einer geeigneten Anzeigeeinheit und/oder akustisch, ausgegeben wird.

8. Verfahren nach zumindest einem der Ansprüche 1 bis 6, **dadurch gekennzeichnet, dass** die Feldgrenze, der Feldgrenzabschnitt und/oder die charakteristischen Landmarken an oder entlang der neuen, durch Verschiebung berechneten Positionskoordinaten, in geeigneter Weise auf einer Anzeigeeinheit ausgegeben wird und/oder die Orte der Referenzmessungen in geeigneter Weise relativ zu der durch Verschiebung berechneten Position der Feldgrenze, des Feldgrenzabschnitts und/oder der charakteristischen Landmarken angezeigt und vorzugsweise zusätzlich die Feldgrenze, der Feldgrenzabschnitt und/oder die charakteristischen Landmarken an ihrer in der Vergangenheit bestimmten Position in geeigneter Weise dargestellt werden.

9. Verfahren nach Anspruch 8, **dadurch gekennzeichnet, dass** auf der die Feldgrenze, den Feldgrenzabschnitt und/oder die charakteristischen Landmarken anzeigenden Anzeigeeinheit Koordinaten dargestellt sind, an denen die Referenzmessungen durch den Fahrer des Zugfahrzeugs oder der landwirtschaftlichen Maschine durchzuführen sind.

10. Verfahren nach zumindest einem der vorangegangenen Ansprüche, **dadurch gekennzeichnet, dass** eine Referenzmessung durch ein auf dem Arbeitsrechner und/oder Jobrechner temporär oder dauerhaft abgespeichertes Programm nur dann akzeptiert wird, falls eine Geradeausfahrt über eine festgelegte Distanz, von vorzugsweise mindestens 10 bis 50 m, der Referenzmessung vorausgegangen ist und andernfalls für den Fahrer ein Hinweis, vorzugsweise ein geeignetes akustisches und/oder optisches Signal auf einer geeigneten Anzeigeeinheit, ausgegeben wird.

11. Verfahren nach zumindest einem der vorangegangenen Ansprüche, **dadurch gekennzeichnet, dass** die Referenzmessungen zur Positionsbestimmung einer Feldgrenze während einer Bearbeitung eines Vorgewendes oder eines ersten Umrundens eines Feldes einer landwirtschaftlichen Fläche durchgeführt wird.

12. Verfahren nach zumindest einem der vorangegangenen Ansprüche, **dadurch gekennzeichnet, dass** während einer Bearbeitung der Randbereiche eines Feldes die Referenzmessungen automatisch an dafür geeigneten Positionen, welche dadurch ausgezeichnet sind, dass die Fahrtrichtungen zueinander mindestens einen vorgegebenen Winkel, vorzugsweise zwischen 30° und 45°, einschließen, durchgeführt werden.

13. Verfahren nach zumindest einem der vorangegangenen Ansprüche, **dadurch gekennzeichnet, dass** die Verschiebeoperation für die Positionsbestimmung einer Feldgrenze derart durchgeführt wird, dass bei einem Abstand des Zugfahrzeugs und/oder der Arbeitsmaschine und/oder Teilen der Arbeitsmaschine, vorzugsweise eines Spritzgestängeauslegers oder den Seiten einer Sämaschine, und/oder eines Bereichs, welcher der Arbeitsmaschine zugeordnet werden kann, wie der Streubereich eines Düngerstreuers, zu zwei näherungsweise parallelen aber nicht kollinearen Feldgrenzabschnitten, welcher einen festgelegten Wert, vorzugsweise zwischen 2 und 15 m, unterschreitet, die Richtung der Verschiebeoperation dadurch bestimmt wird, in welche Richtung senkrecht zur Fahrtrichtung des Zugfahrzeugs oder der Arbeitsmaschine für die Verschiebeoperation eine vom Betrag absolut kürzere Distanz erforderlich ist.

14. Verfahren nach zumindest einem der Ansprüche 1 bis 12, **dadurch gekennzeichnet, dass** die Verschiebeoperation für die Positionsbestimmung einer Feldgrenze von einem auf dem Arbeitsrechner und/oder Jobrechner temporär oder dauerhaft gespeicherten Programm nur an Referenzpunkten akzeptiert wird, welche sich dadurch auszeichnen, dass der Abstand der Arbeitsmaschine und/oder des Zugfahrzeugs und/oder Teilen der Arbeitsmaschine zu einem ersten Feldgrenzabschnitts um mindestens einen festgelegten Betrag, vorzugsweise zwischen 2 und 15 m, kleiner ist, als der Abstand der Arbeitsmaschine und/oder des Zugfahrzeugs und/oder Teilen der Arbeitsmaschine zu einem zweiten Feldgrenzabschnitt und andernfalls ein Hinweis, vorzugsweise ein akustisches und/oder optisches Signal auf einer geeigneten Anzeigeeinrichtung ausgegeben wird und zusätzlich der Fahrer der Arbeits- und/oder Zugmaschine mittels eines Sprachkommandos oder eines Kommandos auf einer Tastatur oder einem berührungsempfindlichen Bildschirm die Verschieberichtung manuell einstellt, wobei der erste und der zweite Feldgrenzabschnitt zueinander zumindest annähernd parallel, aber nicht kollinear verlaufen.

15. Verfahren nach zumindest einem der Ansprüche 1 bis 14, **dadurch gekennzeichnet, dass** die Verschiebeoperation für die Positionsbestimmung einer Feldgrenze für den Fall, dass zwei Feldgrenzabschnitte, welche zueinander nicht parallel verlaufen, sich in einem Abstand von der Arbeitsmaschine und/oder des Zugfahrzeugs und/oder Teilen der Arbeitsmaschine befinden, welcher einen festgelegten Grenzwert, vorzugsweise zwischen 2 und 15 m, unterschreitet bezüglich des Feldgrenzabschnittes durchgeführt wird, welcher den kleineren Winkel zur Fahrtrichtung der Arbeitsmaschine und/oder des Zugfahrzeugs aufweist.

16. Verfahren nach zumindest einem der vorangegangenen Ansprüche, **dadurch gekennzeichnet, dass** für eine Verschiebeoperation einer Feldgrenze die Fahrtrichtung der Arbeitsmaschine und/oder des Zugfahrzeugs im Moment der Referenzmessung parallel zu dem nächstgelegenen Feldgrenzabschnitt ist.

## Claims

1. Method for correcting position coordinates of a field boundary, a field boundary section and/or characteristic landmarks stored temporarily and/or permanently in a memory of a work computer and/or job computer of an agricultural tractor and/or an agricultural working machine (1), measured in the past and shifted with respect to the position currently measured by at least one position sensor (3) located on the tractor and/or the working machine on account of drift effects and/or other error sources incorporated in the position determination by means of satellite location, with the aid of at least two reference measurements of the current position coordinates with precisely that position sensor,
**characterized in that**
in order to make a correction to the position coordinates, the tractor or the working machine travels at a known distance along the field boundary, field boundary section and/or characteristic landmarks, **in that** the aforesaid reference measurements are each used to carry out a mathematical shift operation of the position coordinates measured in the past in order to correct the position coordinates measured in the past and to adapt them to the current measurement, wherein at least two of these shift operations are carried out in a non-parallel direction and the shift direction of at least one of the shift operations is carried out on the basis of location and direction-of-movement data of the working machine and/or of the tractor.

2. Method according to Claim 1, **characterized in that** two of the at least two shift operations, preferably the last two, are performed in mutually perpendicular directions for the final position determination.

3. Method according to at least one of Claims 1 or 2, **characterized in that** the first shift operation is carried out perpendicular to the direction of travel of the tractor or of the working machine.

4. Method according to at least one of Claims 1 to 3, **characterized in that** each of the aforesaid reference measurements is triggered by a command of a driver of the tractor or of the agricultural working machine, in particular at least one voice command or at least one command on a keyboard or a touch-sensitive monitor.

5. Method according to at least one of Claims 1 to 4, **characterized in that**, for the reference measurements, the tractor and/or the agricultural working machine, preferably a field sprayer or fertiliser spreader, must assume a position in space that is predefined by a program stored in the work computer and/or job computer of the tractor and/or the working machine, preferably in such a way that the lateral distance of the working machine, preferably field sprayer or fertiliser spreader, from the field boundary, the field boundary section and/or the characteristic landmarks, must correspond to the length of a sprayer boom or the width of a spread fan reaching beyond the fertiliser spreader.

6. Method according to at least one of Claims 1 to 5, **characterized in that** the directions of movement of the tractor or of the agricultural working machine during two reference measurements used for the shift operation must enclose at least a predefined angle, which is preferably between 30° and 45°, in order to carry out the shift operation.

7. Method according to Claim 6, **characterized in that**, if the predefined angle was not exceeded during the aforesaid reference measurement, an indication is output for the driver, preferably visually on a suitable display unit and/or acoustically.

8. Method according to at least one of Claims 1 to 6, **characterized in that** the field boundary, the field boundary section and/or the characteristic landmarks on or along the new position coordinates calculated by shifting is/are output in a suitable way on a display unit, and/or the locations of the reference measurements are displayed in a suitable way relative to the position of the field boundary, the field boundary section and/or the characteristic landmarks calculated by shifting, and, preferably, in addition the field boundary, the field boundary section and/or the characteristic landmarks are displayed in a suitable way at their position determined in the past.

9. Method according to Claim 8, **characterized in that** coordinates at which the reference measurements are to be carried out by the driver of the tractor or the agricultural machine are displayed on the display unit displaying the field boundary, the field boundary section and/or the characteristic landmarks.

10. Method according to at least one of the preceding claims, **characterized in that** a reference measurement is accepted by a program stored temporarily or permanently on the work computer and/or job computer only if straight-line travel over a defined distance of preferably at least 10 to 50 m has preceded the reference measurement and otherwise, an indication, preferably a suitable acoustic and/or visual signal, is output for the driver on a suitable display unit.

11. Method according to at least one of the preceding claims, **characterized in that** the reference measurements for determining the position of a field boundary carried out whilst processing a headland or a first circuit around a field of an agricultural area.

12. Method according to at least one of the preceding claims, **characterized in that** during processing of the edge regions of a field, the reference measurements are carried out automatically at positions suitable for the purpose, which are distinguished by the fact that the directions of travel enclose at least a predefined angle, preferably between 30° and 45°, relative to each other.

13. Method according to at least one of the preceding claims, **characterized in that** the shift operation for determining the position of a field boundary is carried out in such a way that, at a distance of the tractor and/or the working machine and/or parts of the working machine, preferably a sprayer boom or the sides of a seed drill, and/or a region which can be assigned to the working machine, such as the spreading area of a fertiliser spreader, to two approximately parallel but not collinear field boundary sections which falls below a defined value, preferably between 2 and 15 m, the direction of the shift operation is determined by the direction perpendicular to the direction of travel of the tractor or of the working machine in which a shorter distance in terms of absolute magnitude is required for the shift operation.

14. Method according to at least one of Claims 1 to 12, **characterized in that** the shift operation for determining the position of a field boundary is accepted by a program stored temporarily or permanently on the work computer and/or job computer only at reference points which are distinguished by the fact that the distance of the working machine and/or of the tractor and/or parts of the working machine to a first field boundary section is less by at least a defined amount, preferably between 2 and 15 m, than the distance of the working machine and/or the tractor and/or parts of the working machine to a second field boundary section and, otherwise, an indication, preferably an acoustic and/or visual signal, is output on a suitable display device and, in addition, the driver of the working machine and/or tractor sets the shift direction manually by means of a voice command or a command on a keyboard or a touch-sensitive monitor, wherein the first and the second field boundary sections extend at least approximately parallel but not collinearly relative to each other.

15. Method according to at least one of Claims 1 to 14, **characterized in that** for the case in which two field boundary sections which do not extend parallel to each other are located at a distance from the working machine and/or the tractor and/or parts of the working machine which falls below a defined limiting value, preferably between 2 and 15 m, the shift operation for determining the position of a field boundary is carried out with respect to the field boundary section which has the smaller angle to the direction of travel of the working machine and/or the tractor.

16. Method according to at least one of the preceding claims, **characterized in that** for a shift operation of a field boundary, the direction of travel of the working machine and/or the tractor at the instant of the reference measurement is parallel to the closest field boundary section.

## Revendications

1. Procédé de correction de coordonnées de position d'une limite de champ, d'une partie de limite de champ et/ou de repères caractéristiques, stockées temporairement et/ou de manière permanente dans une mémoire d'un calculateur de travail et/ou d'un calculateur de tâches d'un véhicule tracteur agricole et/ou d'une machine de travail agricole (1), mesurées antérieurement et décalées par rapport à la position actuelle mesurée par au moins un capteur de position (3) se trouvant sur le véhicule tracteur et/ou sur la machine de travail en raison d'effets de dérive liés à la détermination de position au moyen d'un système de positionnement par satellite et/ou à des sources d'erreur de ce type, à l'aide d'au moins deux mesures de référence des coordonnées de position actuelles au moyen dudit capteur de position,
**caractérisé en ce que**, pour effectuer une correction des coordonnées de position, le véhicule tracteur ou la machine de travail se déplace à une distance connue le long de la limite de champ, de la partie de limite de champ et/ou des repères caractéristiques, **en ce que** chacune desdites mesures de référence est respectivement utilisée pour effectuer une opération de décalage mathématique des coordonnées de position antérieurement mesurées, afin de corriger les coordonnées de position antérieurement mesurées et de les adapter à la mesure actuelle, dans lequel au moins deux desdites opérations de décalage sont effectuées dans des directions non parallèles et la direction de décalage d'au moins l'une des opérations de décalage est effectuée sur la base de données de position et de direction de mouvement de la machine de travail et/ou du véhicule tracteur.

2. Procédé selon la revendication 1, **caractérisé en ce que** deux des au moins deux opérations de décalage, de préférence les deux dernières, sont effectuées dans des directions perpendiculaires les unes aux autres pour la détermination de position définitive.

3. Procédé selon au moins l'une des revendications 1 ou 2, **caractérisé en ce que** la première opération de décalage est effectuée perpendiculairement à la direction de déplacement du véhicule tracteur ou de la machine de travail.

4. Procédé selon au moins l'une des revendications 1 à 3, **caractérisé en ce que** chacune desdites mesures de référence est déclenchée par une commande d'un conducteur du véhicule tracteur ou de la machine de travail agricole, notamment par au moins une commande vocale ou au moins une commande saisie sur un clavier ou un écran tactile.

5. Procédé selon au moins l'une des revendications 1 à 4, **caractérisé en ce que** le véhicule tracteur et/ou la machine de travail agricole, de préférence un pulvérisateur agricole ou un épandeur d'engrais, doit, pour les mesures de référence, adopter une position dans l'espace qui est prédéfinie par un programme stocké dans le calculateur de travail et/ou dans un calculateur de tâches du véhicule tracteur et/ou de la machine de travail, de préférence de manière à ce que la distance latérale de la machine de travail, de préférence du pulvérisateur agricole ou de l'épandeur d'engrais, pour la limite de champ, la partie de limite de champ et/ou les repères caractéristiques corresponde à la longueur d'une rampe de tige de pulvérisation ou à la largeur de dépassement d'un éventail d'épandage par rapport à un épandeur d'engrais.

6. Procédé selon au moins l'une des revendications 1 à 5, **caractérisé en ce que** les directions de mouvement du véhicule tracteur ou de la machine de travail agricole pendant deux mesures de référence utilisées pour l'opération de décalage doivent délimiter au moins un angle prédéfini qui est de préférence compris entre 30° et 45°, pour effectuer l'opération de décalage.

7. Procédé selon la revendication 6, **caractérisé en ce que**, dans le cas où l'angle prédéfini pendant ladite mesure de référence n'a pas été dépassé, une indication est fournie au conducteur, de préférence optique sur une unité d'affichage appropriée et/ou acoustique.

8. Procédé selon au moins l'une des revendications 1 à 6, **caractérisé en ce que** la limite de champ, la partie de limite de champ et/ou les repères caractéristiques sont affichés sur ou le long des nouvelles coordonnées de position calculées par décalage, de manière appropriée sur une unité d'affichage et/ou **en ce que** l'emplacement des mesures de référence est affiché de manière appropriée par rapport à la position calculée par décalage de la limite de champ, de la partie de limite de champ et/ou des repères caractéristiques et **en ce que** la limite de champ, la partie de limite de champ et/ou les repères caractéristiques sont en outre de préférence représentés de manière appropriée à leur position antérieurement déterminée.

9. Procédé selon la revendication 8, **caractérisé en ce que** des coordonnées auxquelles des mesures de référence doivent être effectuées par le conducteur du véhicule tracteur ou de la machine agricole sont représentées sur l'unité d'affichage affichant la limite de champ, la partie de limite de champ et/ou les repères caractéristiques.

10. Procédé selon au moins l'une des revendications précédentes, **caractérisé en ce qu'**une mesure de référence n'est acceptée par un programme stocké temporairement ou de manière permanente sur le calculateur de travail et/ou sur le calculateur de tâches que dans le cas où un déplacement en ligne droite d'une distance déterminée, de préférence d'au moins 10 à 50 m, est précédé par la mesure de référence et dans le cas contraire, une indication est fournie au conducteur, de préférence un signal acoustique et/ou optique approprié sur une unité d'affichage appropriée.

11. Procédé selon au moins l'une des revendications précédentes, **caractérisé en ce que** les mesures de référence sont effectuées pour déterminer la position d'une limite de champ pendant le traitement d'une extrémité de champ ou d'un premier angle de champ d'un champ d'une surface agricole.

12. Procédé selon au moins l'une des revendications précédentes, **caractérisé en ce que**, pendant un traitement de la zone de bord d'un champ, les mesures de référence sont automatiquement effectuées à des positions appropriées qui se distinguent par le fait que les directions de déplacement délimitent entre elles au moins un angle prédéfini, de préférence compris entre 30° et 45°.

13. Procédé selon au moins l'une des revendications précédentes, **caractérisé en ce que** l'opération de décalage destinée à la détermination de position d'une limite de champ est effectuée de manière à ce que, lorsqu'une distance du véhicule tracteur et/ou de la machine de travail et/ou de parties de la machine de travail, de préférence d'une rampe de tige de pulvérisation ou des côtés d'une semeuse, et/ou d'une zone qui peut être associée à la machine de travail, telle que la zone d'épandage d'un épandeur d'engrais, par rapport à deux parties de limite de champ pratiquement parallèles mais non colinéaires, s'abaisse en-dessous d'une valeur déterminée, de préférence comprise entre 2 et 15 m, la direction de l'opération de décalage est déterminée comme étant la direction, perpendiculaire à la direction de déplacement du véhicule tracteur ou de la machine de travail, dans laquelle une plus faible distance absolue est nécessaire pour l'opération de décalage.

14. Procédé selon au moins l'une des revendications 1 à 12, **caractérisé en ce que** l'opération de décalage destinée à la détermination de position d'une limite de champ n'est acceptée par un programme stocké temporairement ou de manière permanente sur le calculateur de travail et/ou sur le calculateur de tâches qu'en des points de référence qui se distinguent par le fait que la distance de la machine de travail et/ou du véhicule tracteur et/ou de parties de la machine de travail par rapport à une première partie de limite de champ est inférieure d'au moins une valeur déterminée, de préférence comprise entre 2 et 15 m, à la distance de la machine de travail et/ou du véhicule tracteur et/ou de parties de la machine de travail par rapport à une deuxième partie de limite de champ et dans le cas contraire, une indication, de préférence un signal acoustique et/ou optique, est fournie sur un dispositif d'affichage approprié et le conducteur de la machine de travail et/ou de traction règle en outre manuellement, au moyen d'une commande vocale ou d'une commande saisie sur un clavier ou un écran tactile, la direction de décalage, dans lequel les première et deuxième parties de limite de champ s'étendent au moins approximativement parallèlement l'une à l'autre, mais sont non colinéaires.

15. Procédé selon au moins l'une des revendications 1 à 14, **caractérisé en ce que** l'opération de décalage destinée à la détermination de position d'une limite de champ, est effectuée pour le cas où deux parties de limite de champ qui ne s'étendent pas parallèlement l'une à l'autre, se trouvent à une distance de la machine de travail et/ou du véhicule tracteur et/ou de parties de la machine de travail qui s'abaisse en-dessous d'une valeur limite déterminée, de préférence comprise entre 2 et 15 m, par rapport à la partie de limite de champ qui présente l'angle le plus faible par rapport à la direction de déplacement de la machine de travail et/ou du véhicule tracteur.

16. Procédé selon au moins l'une des revendications précédentes, **caractérisé en ce que**, pour une opération de décalage d'une limite de champ, la direction de déplacement de la machine de travail et/ou du véhicule tracteur au moment de la mesure de référence est parallèle à la partie de limite de champ la plus proche.
